# EUROPÄISCHE PATENTSCHRIFT

(11) **EP 2 193 353 B1**
(45) Veröffentlichungstag und Bekanntmachung des Hinweises auf die Patenterteilung: **07.06.2017**
(21) Anmeldenummer: 08804384.9
(22) Anmeldetag: 18.09.2008
(51) Int. Cl.: G01N 15/06, F01N 11/00, G01N 27/04, G01N 27/403

(54) **VERFAHREN ZUR DETEKTION EINES VERGIFTUNGSGRADS EINES PARTIKELSENSORS UND PARTIKELSENSOR**
METHOD FOR THE DETECTION OF A CONTAMINATION LEVEL OF A PARTICLE SENSOR AND PARTICLE SENSOR
PROCÉDÉ DE DÉTECTION D'UN DEGRÉ D'INTOXICATION D'UN CAPTEUR DE PARTICULE ET CAPTEUR DE PARTICULE

(30) Priorität: 01.10.2007 DE 102007047081
(43) Veröffentlichungstag der Anmeldung: 09.06.2010
(73) Patentinhaber: Robert Bosch GmbH, 70442 Stuttgart (DE)
(72) Erfinder: DIEHL, Lothar, 70839 Gerlingen (DE); WENDLING, Bettina, 80686 Muenchen (DE); SCHITTENHELM, Henrik, 70182 Stuttgart (DE)
(86) Internationale Anmeldenummer: PCT/EP2008/062445
(87) Internationale Veröffentlichungsnummer: WO 2009/047098

(56) Entgegenhaltungen:
- EP-A- 1 925 926
- WO-A-2005/093233
- WO-A-2007/000446
- DE-A1-102005 053 120
- US-A1- 2005 279 084

## Beschreibung

### Beschreibung

Die Erfindung betrifft ein Verfahren zur Detektion eines Vergiftungsgrads eines Partikelsensors sowie einen hierfür geeigneten Partikelsensor, mit dessen Hilfe beispielsweise Rußpartikel in einem Abgasstrom eines Kraftfahrzeugs detektiert werden können.

### Stand der Technik

Aus DE 10 2005 053 120 A1 ist ein resistiver Partikelsensor bekannt, der zwei auf einem Isolatormaterial angeordnete Kammelektroden zur Generierung eines elektrischen Feldes aufweist. Der Partikelsensor ist in einem Abgasstrom eines Kraftfahrzeugs angeordnet, so dass sich zwischen den beiden Elektroden Rußpartikel anlagern können. Nach einer bestimmten Zeit (Blindzeit) haben sich so viele Rußpartikel angelagert, dass zwischen den beiden Elektroden ein Strom fließen kann, der mit Hilfe eines Messgeräts detektiert werden kann. Das von dem Messgerät erhältliche Messsignal ist nach einer nicht linearen Übergangsphase proportional zu den angelagerten Rußpartikeln, so dass in diesem linearen Messbereich die Menge der angelagerten Rußpartikel detektiert werden kann. Um den Partikelsensor vor einer vollständigen Verrußung zu bewahren, muss der Partikelsensor regeneriert werden, indem der Partikelsensor auf eine Temperatur erwärmt wird, die so hoch ist, dass die angelagerten Rußpartikel abbrennen. Danach ist der Partikelsensor wieder einsatzbereit und kann nach Ablauf der Blindzeit angelagerte Rußpartikel detektieren. WO 2007/000446) offenbart ein Verfahren zur Regeneration eines Partikelsensors, mit den Schritten: Bereitstellen eines Partikelsensors , der zwei auf einem Isolatormaterial angeordnete Elektroden zur Generierung eines elektrischen Feldes aufweist; Erwärmen des Isolatormaterials bis oberhalb einer Grenztemperatur zwischen 250 und 450 °C; moduliertes Heizen und/oder Kühlen des Isolatormaterials mit einer unteren Temperatur und einer oberen Temperatur, zwischen denen die Modulation erfolgt, wobei die untere Temperatur diese Grenztemperatur ist und die obere Temperatur oberhalb von der Grenztemperatur zwischen 500 und 800 °C liegt. WO2007/000446 offenbart auch das Messen des zeitlichen Verlaufs des zwischen den Elektroden abgreifbaren Messsignals während der Temperaturmodulation. Nachteilig bei einem derartigen Partikelsensor ist, dass sich an dem Partikelsensor auch Aschepartikel ablagern, die während der Regeneration des Partikelsensors nicht abbrennen. RD 40171 / SAM:GR:sn

Derartige Aschen treten beispielsweise bei Verwendung von Additiven zur Dieselpartikelfilter-Regeneration auf, so dass sich in dem Partikelsensor nicht nur Rußpartikel, sondern auch Eisen- und Ceroxid-Partikel anlagern können. Die angelagerten Aschepartikel beeinträchtigen die Genauigkeit des Partikelsensors, so dass derartige Ascheanlagerungen auch als eine Vergiftung des Partikelsensors bezeichnet werden.

Es ist die Aufgabe der Erfindung ein Verfahren und einen Partikelsensor zu schaffen, mit deren Hilfe die Vergiftung des Partikelsensors detektiert werden kann.

### Offenbarung der Erfindung

Die Lösung der Aufgabe erfolgt erfindungsgemäß durch ein Verfahren zur Detektion eines Vergiftungsgrads eines Partikelsensors mit den Merkmalen des Anspruchs 1 sowie durch einen Partikelsensor mit den Merkmalen des Anspruchs 10. Vorteilhafte Ausgestaltungen der Erfindung sind in den Unteransprüchen angegeben.

Bei dem erfindungsgemäßen Verfahren zur Detektion eines Vergiftungsgrads eines Partikelsensors wird zunächst ein Partikelsensor bereitgestellt, der zwei auf einem Isolatormaterial angeordnete Elektroden zur Generierung eines elektrischen Feldes aufweist. Der Partikelsensor wird insbesondere in einen Abgaskanal eines Kraftfahrzeugs angeordnet, so dass der Partikelsensor in einem Abgasstrom eines Kraftfahrzeugs enthaltene Rußpartikel detektieren kann. Zumindest das Isolatormaterial des Partikelsensors wird bis oberhalb einer Grenztemperatur des Isolatormaterials erwärmt, bei der das Isolatormaterial beginnt leitfähig zu werden. Diese Grenztemperatur kann für beliebige Isolatormaterialien einfach ermittelt werden, indem eine Änderung des Ohmschen Widerstands des Isolatormaterials in Abhängigkeit von der Temperatur des Isolatormaterials ermittelt wird. Oberhalb der Grenztemperatur des Isolatormaterials erfolgt ein moduliertes Heizen und/oder Kühlen des Isolatormaterials, wobei die Modulation zwischen einer unteren Temperatur und einer oberen Temperatur erfolgt. Sowohl die untere Temperatur als auch die obere Temperatur liegen oberhalb von der Grenztemperatur des Isolatormaterials. Da das Isolatormaterial bei diesen Temperaturen leitfähig ist, kann zwischen den Elektroden ein Messsignal, das beispielsweise auf einen Stromfluss und/oder einer Widerstandsmessung beruht, gemessen werden. Der zeitliche Verlauf des während der Modulation zwischen den Elektroden abgreifbaren Messsignals wird gemessen. Der gemessene zeitliche Verlauf wird mit einem theoretischen zeitlichen Verlauf des Messsignals, der sich bei einem vergiftungsfreien Zustand des Partikelsensors einstellen würde, kompensiert, wobei bei der Kompensation eine temperaturabhängige Leitfähigkeit des Isolatormaterials berücksichtigt wird. In Kenntnis der temperaturabhängigen Leitfähigkeit des verwendeten Isolatormaterials und ggf. der Kenntnis der Wärmeleitfähigkeit des Isolatormaterials kann der theoretische zeitliche Verlauf des Messsignals explizit berechnet werden. Durch die Kompensation des gemessenen zeitlichen Verlaufs mit dem theoretischen zeitlichen Verlauf des Messsignals wird ein zeitlicher Verlauf eines Differenzsignals erhalten. Dieses Differenzsignal wird ausgewertet, um den Vergiftungsgrad des Partikelsensors zu bestimmen. Bei der Auswertung ist die durchschnittliche und/oder maximale Signalgröße des Differenzsignals ein Maß für den Vergiftungsgrad des Partikelsensors.

Bei dem erfindungsgemäßen Verfahren wird ausgenutzt, dass die angelagerten Aschen, die zu einer Vergiftung des Partikelsensors führen, ebenfalls leitfähig sind und/oder bei den modulierten Temperaturen leitfähig werden und somit zu einem messbaren Signal führen. Die Temperaturabhängigkeit der Leitfähigkeit ist jedoch eine Materialeigenschaft, die bei verschiedenen Materialien unterschiedlich ist, so dass aufgrund der von dem Isolatormaterial verschiedenen temperaturabhängigen Leitfähigkeit der Aschen ein Messsignal erhalten wird, das im Vergleich zu einer Messung bei einem vergiftungsfreien Zustand des Partikelsensors eine unterschiedliche Amplitude und/oder Phase aufweist, so dass nach der Kompensation des gemessenen zeitlichen Verlaufs mit dem theoretischen Verlauf eines vergiftungsfreien Partikelsensors ein Differenzsignal erhältlich ist. Das Differenzsignal kann auch weiter bearbeitet worden sein, indem beispielsweise der Gradient des Differenzsignals bestimmt und für die nachfolgenden Schritte verwendet wird. Insbesondere ist das erhältliche Differenzsignal unabhängig von der tatsächlichen aktuellen Temperatur des Partikelsensors, so dass eine genaue Temperaturmessung und/oder die Kenntnis von Umgebungsparametern des Partikelsensors nicht erforderlich sind. Die Detektion des Vergiftungsgrads des Partikelsensors liefert daher sowohl beim Betrieb eines Kraftfahrzeugs, in das der Partikelsensor eingebaut ist, als auch beim Stillstand des Kraftfahrzeugs die gleichen Ergebnisse.

Vorzugsweise wird die Modulation innerhalb eines Zeitbereiches durchgeführt, indem beim Betrieb des Partikelsensors ohne Modulation ein im Wesentlichen stetiges und/oder lineares Messsignal erwartet wird. Eine Überlagerung der Modulation mit nicht linearen Messeffekten wird dadurch vermieden, so dass die rechnerische Kompensation des gemessenen zeitlichen Verlaufs mit dem theoretischen zeitlichen Verlauf des Messsignals vereinfacht ist.

Die Modulation kann insbesondere nach einer Regenerationszeit des Partikelsensors und vor der Messung eines sich verändernden Messsignals durchgeführt werden. Die Modulation kann somit während der Blindzeit des Partikelsensors erfolgen, in der die Kompensation ggf. störende Messsignale nicht erforderlich ist. Zusätzlich bzw. alternativ kann die Modulation vor der Regenerationszeit des Partikelsensors und innerhalb eines Zeitbereichs, in dem sich das Messsignal linear ändert, durchgeführt werden. Die Modulation kann also auch während der üblichen Messzeit des Partikelsensors durchgeführt werden, um auch bei angelagerten Rußpartikeln die Vergiftung durch angelagerte Aschpartikel detektieren zu können.

Bei der Kompensation erfolgt insbesondere eine weitere Kompensation, bei der eine temperaturabhängige Leitfähigkeit der angelagerten Aschen und/oder Rußpartikel berücksichtigt wird. Die temperaturabhängige Leitfähigkeit der Aschen und/oder Rußpartikel kann experimentell bestimmt werden. Die weitere Kompensation des zeitlichen Verlaufs des Messsignals unter der zusätzlichen Berücksichtigung der temperaturabhängigen Leitfähigkeit der Aschen- und/oder Rußpartikel wird insbesondere bei der Auswertung des Differenzsignals berücksichtigt, so dass es möglich ist, das erhaltene Differenzsignal mit den durch die Vergiftung rechnerisch bestimmbaren Differenzsignal zu vergleichen. Dadurch ist es möglich, zusätzliche Nebenschlüsse zu detektieren, die weder über das Isolatormaterial noch über die angelagerten Aschen und/oder Rußpartikel verursacht sind und beispielsweise über die Bordelektronik eines Kraftfahrzeugs erfolgen. Dadurch ist es möglich, auch externe Störungen, die zu einer ineffizienten Partikelmessung führen, detektieren zu können.

Vorzugsweise ist bei der Auswertung ein vordefiniertes Toleranzband für das Differenzsignal vorgegeben. Übliche Messungenauigkeiten können dadurch berücksichtigt werden. Insbesondere bewirkt ein signifikantes Überschreiten und/oder Unterschreiten des Toleranzbandes durch das Differenzsignal, das eine Vergiftung des Partikelsensors diagnostiziert und/oder eine Korrektur des abgreifbaren Messsignals vorgenommen wird. Die Korrektur ist insbesondere derart bemessen, dass das Differenzsignal nach der Korrektur innerhalb des Differenzbandes liegt. Zur Korrektur kann beispielsweise ein variabler elektrischer Widerstand eingestellt werden, der die verbesserte Leitfähigkeit über die angelagerten Aschen kompensiert.

Bei der Kompensation wird insbesondere von einer im Wesentlichen linearen Änderung der temperaturabhängigen Leitfähigkeit ausgegangen. Dadurch wird die rechnerische Kompensation erleichtert. Da die relevanten Materialien, insbesondere das Isolatormaterial, der Ruß und/oder die Asche, Heißleiter mit einem negativen Temperaturkoeffizienten sind, verringert sich oberhalb einer bestimmten Temperatur die Leitfähigkeit, die zuvor im Wesentlichen konstant war (NTC-Verhalten). Aufgrund des NTC-Verhaltens der relevanten Materialien wird vorzugsweise erst oberhalb dieser Temperatur, bei der eine Änderung der Leitfähigkeit erfolgt, beispielsweise oberhalb der Grenztemperatur, von einer im Wesentlichen linearen Änderung der temperaturabhängigen Leitfähigkeit ausgegangen. Bei der Kompensation kann das NTC-Verhalten somit mit berücksichtigt werden.

Besonders bevorzugt wird bei der Modulation länger geheizt als gekühlt. Dadurch ist es möglich, bei der Modulation gleichzeitig das Erwärmen des Isolatormaterials über die Grenztemperatur herbeizuführen. Die Kenntnis einer aktuellen Temperatur des Isolatormaterials ist nicht erforderlich. Statt dessen kann besonders einfach festgestellt werden, dass die Grenztemperatur in einem ausreichenden Maße überschritten ist, wenn sowohl bei der oberen Temperatur als auch bei der unteren Temperatur ein deutlich verändertes Messsignal detektiert werden kann.

Ferner ist es möglich, dass sich während der Modulation die untere Temperatur und/oder die obere Temperatur verändert. Dies führt zu einem besser auflösbaren Differenzsignal, da sich die Störungen, die durch den Nebenfluss über die angelagerten Partikel entstehen, verstärken.

Die Erfindung betrifft ferner einen Partikelsensor, der insbesondere zur Durchführung des vorstehend beschriebenen Verfahrens geeignet ist. Der Partikelsensor weist zwei auf einem Isolatormaterial angeordnete Elektroden auf, mit dessen Hilfe ein elektrisches Feld generiert werden kann. Mit Hilfe eines Messgeräts kann ein zwischen den Elektroden abgreifbares Messsignal detektiert werden. Ferner ist ein Steuergerät vorgesehen, dass mit Hilfe einer Heizvorrichtung eine Temperatur des Isolatormaterials oberhalb einer Grenztemperatur, bei der das Isolatormaterial beginnt, leitfähig zu werden, zwischen einer unteren Temperatur und einer oberen Temperatur modulieren kann. Sowohl die untere Temperatur als auch die obere Temperatur liegen oberhalb der Grenztemperatur. Das Steuergerät weist eine Rechnereinheit auf, in welcher der gemessene zeitliche Verlauf des Messsignals mit einem theoretischen zeitlichen Verlauf des Messsignals bei einem vergiftungsfreien Zustand des Sensors unter Berücksichtigung einer temperaturabhängigen Leitfähigkeit des Isolatormaterials kompensierbar ist. Dadurch ist ein zeitlicher Verlauf eines Differenzsignals erhältlich und es kann basierend auf einer Auswertung des Differenzsignals in der Rechnereinheit ein Vergiftungsgrad des Partikelsensors bestimmt werden. Der Partikelsensor kann insbesondere, wie vorstehend, anhand des Verfahrens zur Detektion des Vergiftungsgrads des Partikelsensors erläutert, aus- und weitergebildet sein.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

Es zeigen:
- Fig. 1:: eine schematische perspektivische Ansicht eines erfindungsgemäßen Partikelsensors,
- Fig. 2: ein schematisches, nicht maßstäbliches Diagramm eines von dem Partikelsensor erhältlichen Messsignals,
- Fig. 3: einen schematischen Vergleich während einer Modulation erhältlicher Parameter,
- Fig. 4: einen schematischen Vergleich während einer Modulation erhältlichen Parameter im vergifteten und unvergifteten Zustand des Partikelsensors in einem ersten Zeitraum und
- Fig. 5: einen schematischen Vergleich während einer Modulation erhältlichen Parameter im vergifteten und unvergifteten Zustand des Partikelsensors in einem zweiten Zeitraum.

### Detaillierte Beschreibung der Zeichnungen

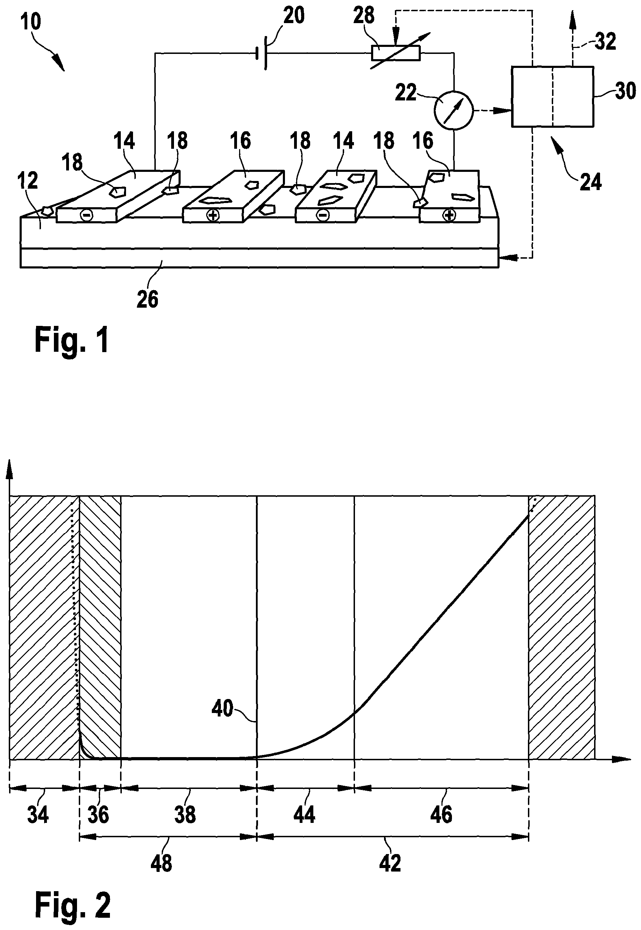

Der in Fig. 1 dargestellte Partikelsensor 10 weist ein Isolatormaterial 12 auf, auf dem alternierend eine erste Elektrode 14 und eine zweite Elektrode 16 angeordnet sind. Auf dem Isolatormaterial 12 und den Elektroden 14, 16 lagern sich während des Betriebs des Partikelsensors 10 Aschepartikel 18 an, die zu einem elektrischen Nebenschluss zwischen der ersten Elektrode 14 und der zweiten Elektrode 16 führen können. Zwischen der ersten Elektrode 14 und der zweiten Elektrode 16 ist eine Spannungsquelle 20 angeordnet, um zwischen Elektroden 14, 16 ein elektrisches Feld zu generieren. Der Widerstand zwischen den Elektroden 14, 16 und/oder der zwischen den Elektroden 14, 16 fließende Strom kann mit Hilfe eines Messgeräts 22 detektiert werden.

Der zeitliche Verlauf des mit dem Messgerät 22 gemessenen Messsignals wird in einem Steuergerät 24 verarbeitet. Das Steuergerät 24 kann ferner eine Heizvorrichtung 26 steuern, um das Isolatormaterial 12 oberhalb einer Grenztemperatur, bei der das Isolatormaterial 12 beginnt leitfähig zu werden, zu erwärmen und zwischen einer unteren Temperatur und einer oberen Temperatur, die jeweils oberhalb der Grenztemperatur liegen, zu modulieren. Basierend auf einer Auswertung des während der Modulation erhältlichen gemessenen Messsignals kann die Steuereinheit 24 den ohmschen Widerstand eines veränderlichen elektrischen Widerstands 28 variieren. Das Steuergerät 24 weist ferner eine Rechnereinheit 30 auf, in der eine Kompensation des gemessenen Messsignals mit einem theoretischen Messsignal sowie eine Auswertung eines durch die Kompensation erhältlichen Differenzsignals erfolgt. Das Ergebnis der Auswertung kann über eine Datenleitung 32 beispielsweise an eine On-Board-Diagnoseeinheit eines Kraftfahrzeugs weitergeleitet werden, um in Abhängigkeit des Vergiftungsgrads des Partikelsensors 10 Maßnahmen einzuleiten.

In Fig. 2 ist das von dem Messgerät 22 erhältliche Messsignal über der Zeit dargestellt, das während eines Betriebszyklus des Partikelsensors 10 erhältlich ist. In einer Regerationsphase 34 werden auf dem Partikelsensor 10 angelagerte Rußpartikel abgebrannt. Anschließend wird der Partikelsensor während einer Thermalisierungsphase 36 auf seine übliche Betriebstemperatur gebracht. Daran schließt sich eine Blindzeit 38 an, innerhalb der sich so viele Rußpartikel auf den Partikelsensor 10 ablagert bis zu einem Auslösepunkt 40 ein Messsignal detektiert werden kann und eine Messzeit 42 beginnt, wobei es prinzipiell möglich ist jeden Bereich für eine Signalinterpretation zu verwenden. Die Messzeit 42 weist einen nicht-linearen Übergangsbereich 44 auf, an dem sich ein linearer Messbereich 46 anschließt. Sobald sich zu viele Rußpartikel an dem Partikelsensor 10 angelagert haben, erfolgt wieder eine Regenerationszeit 34 zum Abbrennen der Rußpartikel, an die sich eine Auslösezeit 48 anschließt bis wieder die Messzeit 42 beginnt.

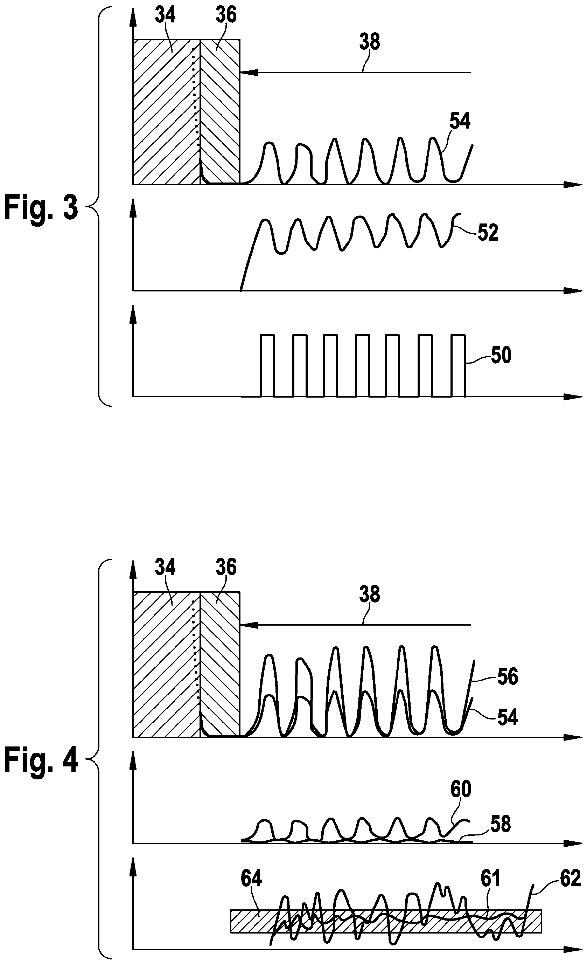

Wie in Fig. 3 in dem unteren Diagramm dargestellt, kann die Heizleistung 50 der Heizvorrichtung 26 während einer Modulation in der Blindzeit 38 einen rechteckförmigen Verlauf aufweisen, so dass sich der in dem mittleren Diagramm dargestellte Verlauf 52 der Isolatormaterialtemperatur einstellt. Dies führt bei einem unvergifteten Partikelsensor 10 während der Blindzeit 38 zu dem in dem oberen Diagramm dargestellten Messsignal 54.

In Fig. 4 ist in dem oberen Diagramm zusätzlich zu dem in Fig. 3 dargestellten Messwerten 54 im vergiftungsfreien Zustand ein Messwert 56 im vergifteten Zustand des Partikelsensors 10 über der Zeit aufgetragen. Nach der Kompensation der Temperaturabhängigkeit der Leitfähigkeit des Isolatormaterials ergibt sich ein Differenzsignal 58 bei einem vergiftungsfreien Zustand und ein Differenzsignal 60 bei vergiftetem Zustand. Um die Unterschiede zwischen den Differenzsignalen 58, 60 zu verdeutlichen, ist in dem unteren Diagramm ein Gradient 61 des Differenzsignals 58 bei vergiftungsfreiem Zustand und ein Gradient 62 des Differenzsignals 60 bei vergiftetem Zustand über der Zeit aufgetragen. Ferner ist ein vordefiniertes Toleranzband 64 vorgegeben, innerhalb dessen sich der vergiftungsfreie Gradient 62 bewegt, während der vergiftete Gradient 61 auch außerhalb des Toleranzbandes 64 liegt.

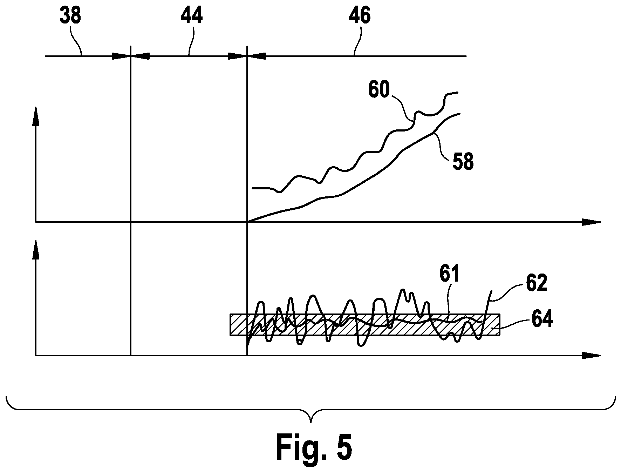

Im Vergleich zu Fig. 3 und Fig. 4 ist in Fig. 5 in dem oberen Diagramm der Verlauf der Differenzsignale 58, 60 dargestellt, wenn die Modulation in der linearen Messzeit 46 erfolgt. Bei den in dem unteren Diagramm dargestellten Gradienten 61, 62 der Differenzsignale 58, 60 wurde zusätzlich die Temperaturabhängigkeit des Rußes kompensiert, so dass sich ein Verlauf ergibt, der im Wesentlichen dem im unteren Diagramm von Fig. 4 dargestellten Verlauf entspricht, bei dem eine Kompensation der Temperaturabhängigkeit des Rußes nicht erforderlich war, da durch den Ruß während der Blindzeit 38 kein elektrisches Signal verursacht wird. Insbesondere ist erkennbar, dass nach dem Kompensationsschritt durch Nebenschlüsse verursachte Stromänderungen im Messsignal 56, beispielsweise durch die Anwesenheit von Aschepartikeln 18 oder Wasser, der Gradient 62 deutlich außerhalb des Toleranzbandes 64 liegt. Der Vergleich des unteren Diagramms aus Fig. 5 mit dem unteren Diagramm aus Fig. 4 zeigt, dass dies auch der Fall ist, wenn zusätzlich die Temperaturabhängigkeit des Rußes kompensiert wird, da in diesem Fall das durch Nebenschlüsse erhaltene Messsignal 56 überkompensiert wird und der Gradient 62 ebenfalls deutlich außerhalb des Toleranzbandes 64 liegt.

## Patentansprüche

1. Verfahren zur Detektion eines Vergiftungsgrads eines Partikelsensors (10), mit den Schritten:
- Bereitstellen eines Partikelsensors (10), der zwei auf einem Isolatormaterial (12) angeordnete Elektroden (14, 16) zur Generierung eines elektrischen Feldes aufweist,
- Erwärmen des Isolatormaterials (12) bis oberhalb einer Grenztemperatur, bei der das Isolatormaterial (12) beginnt leitfähig zu werden,
- moduliertes Heizen und/oder Kühlen des Isolatormaterials (12) mit einer unteren Temperatur und einer oberen Temperatur, zwischen denen die Modulation erfolgt, wobei sowohl die untere Temperatur als auch die obere Temperatur oberhalb von der Grenztemperatur liegen,
- Messen eines zeitlichen Verlaufs eines während der Modulation zwischen den Elektroden (14, 16) abgreifbaren Messsignals (54, 56),
- Kompensieren des gemessenen zeitlichen Verlaufs des Messsignals (54, 56) mit einem theoretischen zeitlichen Verlauf des Messsignals bei einem vergiftungsfreien Zustand des Partikelsensors (10) unter Berücksichtigung einer temperaturabhängigen Leitfähigkeit des Isolatormaterials (12), um einen zeitlichen Verlauf eines Differenzsignals (58, 60; 61, 62) zu erhalten, und
- Auswerten des Differenzsignals (58, 60; 61, 62) zur Bestimmung des Vergiftungsgrads des Partikelsensors (10).

2. Verfahren nach Anspruch 1, bei dem die Modulation innerhalb eines Zeitbereichs durchgeführt wird, in dem beim Betrieb des Partikelsensors (10) ohne Modulation ein im Wesentlichen stetiges und/oder lineares Messsignal (54, 56) erwartet wird.

3. Verfahren nach Anspruch 1 oder 2, bei dem die Modulation nach einer Regenerationszeit (34) des Partikelsensors (10) und vor Messung eines sich veränderndes Messsignals (54, 56) durchgeführt wird.

4. Verfahren nach einem der Ansprüche 1 bis 3, bei dem die Modulation vor einer Regenerationszeit (34) des Partikelsensors (10) und innerhalb eines Zeitbereichs (46), in dem sich das Messsignal (54, 56) linear ändert, durchgeführt wird.

5. Verfahren nach einem der Ansprüche 1 bis 4, bei dem bei der Kompensation eine weitere Kompensation erfolgt, bei der eine temperaturabhängige Leitfähigkeit angelagerter Aschen (16) und/oder Rußpartikel (18) berücksichtigt wird, und die weitere Kompensation bei der Auswertung des nach der weiteren Kompensation entstehenden Differenzsignals (58, 60; 61, 62) berücksichtigt wird.

6. Verfahren nach einem der Ansprüche 1 bis 5, bei dem bei der Auswertung ein vordefiniertes Toleranzband (64) für das Differenzsignal (58, 60; 61, 62) vorgegeben wird, wobei ein signifikantes Überschreiten und/oder Unterschreiten des Toleranzbandes (64) durch das Differenzsignal (58, 60; 61, 62) bewirkt, dass eine Vergiftung des Partikelsensors (10) diagnostiziert wird und/oder eine Korrektur des abgreifbaren Messsignals (54, 56) vorgenommen wird, wobei die Korrektur derart bemessen ist, dass das Differenzsignal (58, 60; 61, 62) nach der Korrektur innerhalb des Toleranzbandes (64) liegt.

7. Verfahren nach einem der Ansprüche 1 bis 6, bei dem bei der Kompensation von einer im Wesentlichen linearen Änderung der temperaturabhängigen Leitfähigkeit ausgegangen wird, wobei insbesondere das NTC-Verhalten berücksichtigt wird.

8. Verfahren nach einem der Ansprüche 1 bis 7, bei dem bei der Modulation länger geheizt als gekühlt wird.

9. Verfahren nach einem der Ansprüche 1 bis 8, bei dem sich die untere Temperatur und/oder die obere Temperatur während der Modulation verändern.

10. Partikelsensor, insbesondere zur Durchführung eines Verfahrens nach einem der Ansprüche 1 bis 9, mit
zwei auf einem Isolatormaterial (12) angeordneten Elektroden (14, 16) zur Generierung eines elektrischen Feldes und
einem Messgerät (22) zur Detektion eines zwischen den Elektroden abgreifbaren Messsignals (54, 56),
wobei ein Steuergerät (24) vorgesehen ist,
das mit Hilfe einer Heizvorrichtung (26) eine Temperatur des Isolatormaterials (12) oberhalb einer Grenztemperatur, bei der das Isolatormaterial (12) beginnt leitfähig zu werden, zwischen einer unteren Temperatur und einer oberen Temperatur, wobei sowohl die untere Temperatur als auch die obere Temperatur oberhalb von der Grenztemperatur liegen, modulieren kann und
eine Rechnereinheit (30) aufweist, in welcher der gemessene zeitlichen Verlaufs des Messsignals (54, 56) mit einem theoretischen zeitlichen Verlauf des Messsignals bei einem vergiftungsfreien Zustand des Partikelsensors (10) unter Berücksichtigung einer temperaturabhängigen Leitfähigkeit des Isolatormaterials (12) kompensierbar ist, um einen zeitlichen Verlauf eines Differenzsignals (58, 60; 61, 62) zu erhalten und basierend auf einer Auswertung des Differenzsignals (58, 60; 61, 62) in der Rechnereinheit (30) einen Vergiftungsgrad des Partikelsensors (10) zu bestimmen.

## Claims

1. Method for the detection of a contamination level of a particle sensor (10), comprising the steps of:
- providing a particle sensor (10), which has two electrodes (14, 16) arranged on an insulator material (12) for generating an electrical field,
- heating the insulator material (12) to above a limiting temperature, at which the insulator material (12) begins to become conductive,
- modulated heating and/or cooling of the insulator material (12) with a lower temperature and an upper temperature between which the modulation takes place, both the lower temperature and the upper temperature lying above the limiting temperature;
- measuring a variation over time of a measuring signal (54, 56) that can be detected between the electrodes (14, 16) during the modulation,
- compensating the measured variation over time of the measuring signal (54, 56) with a theoretical variation over time of the measuring signal in a contamination-free state of the particle sensor (10), taking a temperature-dependent conductivity of the insulator material (12) into account, in order to obtain a variation over time of a differential signal (58, 60; 61, 62), and
- evaluating the differential signal (58, 60; 61, 62) for determining the contamination level of the particle sensor (10).

2. Method according to Claim 1, in which the modulation is carried out within a time range in which a substantially constant and/or linear measuring signal (54, 56) is expected during operation of the particle sensor (10) without modulation.

3. Method according to Claim 1 or 2, in which the modulation is carried out after a regeneration time (34) of the particle sensor (10) and before measurement of a changing measuring signal (54, 56).

4. Method according to one of Claims 1 to 3, in which the modulation is carried out before a regeneration time (34) of the particle sensor (10) and within a time range (46) in which the measuring signal (54, 56) changes linearly.

5. Method according to one of Claims 1 to 4, in which during the compensation a further compensation is carried out, taking into account a temperature-dependent conductivity of accumulated ash (16) and/or soot particles (18), and the further compensation is taken into account in the evaluation of the differential signal (58, 60; 61, 62) produced after the further compensation.

6. Method according to one of Claims 1 to 5, in which a predefined tolerance band (64) for the differential signal (58, 60; 61, 62) is specified in the evaluation, a significant overshooting and/or undershooting of the tolerance band (64) by the differential signal (58, 60; 61, 62) having the effect that a contamination of the particle sensor (10) is diagnosed and/or a correction of the detectable measuring signal (54, 56) is performed, the magnitude of the correction being such that after the correction the differential signal (58, 60; 61, 62) lies within the tolerance band (64).

7. Method according to one of Claims 1 to 6, in which a substantially linear change in the temperature-dependent conductivity is assumed during the compensation, the NTC behaviour being taken into account in particular.

8. Method according to one of Claims 1 to 7, in which heating is carried out for longer than cooling during the modulation.

9. Method according to one of Claims 1 to 8, in which the lower temperature and/or the upper temperature change(s) during the modulation.

10. Particle sensor, in particular for carrying out a method according to one of Claims 1 to 9, comprising:
two electrodes (14, 16) arranged on an insulator material (12) for generating an electrical field
and
a measuring device (22) for detecting a measuring signal (54, 56) that can be detected between the electrodes,
a control unit (24) being provided
which with the aid of a heating device (26) can modulate a temperature of the insulator material (12) above a limiting temperature, at which the insulator material (12) begins to become conductive, between a lower temperature and an upper temperature, both the lower temperature and the upper temperature lying above the limiting temperature, and
has a computer unit (30), in which the measured variation over time of the measuring signal (54, 56) can be compensated with a theoretical variation over time of the measuring signal in a contamination-free state of the particle sensor (10) while taking a temperature-dependent conductivity of the insulator material (12) into account, in order to obtain a variation over time of a differential signal (58, 60; 61, 62) and determine a contamination level of the particle sensor (10) on the basis of an evaluation of the differential signal (58, 60; 61, 62) in the computer unit (30).

## Revendications

1. Procédé de détection d'un degré de contamination d'un capteur de particule (10), comprenant les étapes consistant à :
- disposer d'un capteur de particule (10) qui comprend deux électrodes (14, 16) placées sur un matériau isolant (12) pour générer un champ électrique,
- chauffer le matériau isolant (12) au-delà d'une température limite à laquelle le matériau isolant (12) commence à devenir conducteur,
- chauffer et/ou refroidir de façon modulée le matériau isolant (12) avec une température inférieure et une température supérieure entre lesquelles la modulation s'effectue, dans lequel la température inférieure et la température supérieure se situent au-dessus de la température limite,
- mesurer une variation dans le temps d'un signal de mesure (54, 56) pouvant être prélevé au cours de la modulation entre les électrodes (14, 16),
- compenser la variation dans le temps mesurée du signal de mesure (54, 56) par une variation dans le temps théorique du signal de mesure lorsque le capteur de particule (10) se trouve dans un état non contaminé en tenant compte d'une conductivité dépendant de la température du matériau isolant (12), afin d'obtenir une variation dans le temps d'un signal de différence (58, 60 ; 61, 62), et
- analyser le signal de différence (58, 60 ; 61, 62) afin de déterminer le degré de contamination du capteur de particule (10).

2. Procédé selon la revendication 1, dans lequel la modulation est effectuée à l'intérieur d'une plage temporelle dans laquelle on s'attend à un signal de mesure (54, 56) sensiblement constant et/ou linéaire lors d'un fonctionnement du capteur de particule (10) sans modulation.

3. Procédé selon la revendication 1 ou 2, dans lequel la modulation est effectuée après un temps de régénération (34) du capteur de particule (10) et avant la mesure d'un signal de mesure (54, 56) variable.

4. Procédé selon l'une quelconque des revendications 1 à 3, dans lequel la modulation est effectuée avant un temps de régénération (34) du capteur de particule (10) et à l'intérieur d'une plage temporelle (46) au cours de laquelle le signal de mesure (54, 56) varie linéairement.

5. Procédé selon l'une quelconque des revendications 1 à 4, dans lequel, lors de la compensation, une compensation supplémentaire est effectuée, lors de laquelle une conductivité dépendant de la température de cendres (16) et/ou de particules de suie déposées est prise en compte, et la compensation supplémentaire est prise en compte lors de l'analyse du signal de différence (58, 60 ; 61, 62) se produisant après la compensation supplémentaire.

6. Procédé selon l'une quelconque des revendications 1 à 5, dans lequel une bande de tolérance (64) prédéfinie pour le signal de différence (58, 60 ; 61, 62) est prédéterminée lors de l'analyse, dans lequel un dépassement vers le haut et/ou un dépassement vers le bas significatif de la bande de tolérance (64) par le signal de différence (58, 60 ; 61, 62) a pour effet qu'une contamination du capteur de particule (10) est diagnostiquée et/ou une correction du signal de mesure (54, 56) pouvant être prélevé est effectuée, dans lequel la correction est mesurée de manière à ce que le signal de différence (58, 60 ; 61, 62) se situe à l'intérieur de la bande de tolérance (64) après la correction.

7. Procédé selon l'une quelconque des revendications 1 à 6, dans lequel, lors de la compensation, une variation sensiblement linéaire de la conductivité dépendant de la température est interrompue, dans lequel le comportement NTC est notamment pris en compte.

8. Procédé selon l'une quelconque des revendications 1 à 7, dans lequel, lors de la modulation, le chauffage dure plus longtemps que le refroidissement.

9. Procédé selon l'une quelconque des revendications 1 à 8, dans lequel la température inférieure et/ou la température supérieure varient au cours de la modulation.

10. Capteur de particule, notamment destiné à mettre en oeuvre un procédé selon l'une quelconque des revendications 1 à 9, comportant
deux électrodes (14, 16) placées sur un matériau isolant (12) pour générer un champ électrique, et
un appareil de mesure (22) pour détecter un signal de mesure (54, 56) pouvant être prélevé entre les électrodes,
dans lequel il est prévu un appareil de commande (24) pouvant moduler, à l'aide d'un dispositif de chauffage (26), une température du matériau isolant (12) au-dessus d'une température limite à laquelle le matériau isolant (12) commence à devenir conducteur, entre une température inférieure et une température supérieure, la température inférieure et la température supérieure se situant toutes deux au-dessus de la température limite, et comportant une unité de calcul (30) dans laquelle la variation dans le temps mesurée du signal de mesure (54, 56) peut être compensée dans l'unité de calcul (30) par une variation dans le temps théorique du signal de mesure dans un état contaminé du capteur de particule (10) en tenant compte d'une conductivité dépendant de la température du matériau isolant (12), afin d'obtenir une variation dans le temps d'un signal de différence (58, 60 ; 61, 62) et de déterminer dans l'unité de calcul (30) un degré de contamination du capteur de particule (10) sur la base d'une analyse du signal de différence (58, 60 ; 61, 62).
